(19) Europäisches Patentamt / European Patent Office / Office européen des brevets

(11) **EP 2 662 704 B1**

(12) **EUROPEAN PATENT SPECIFICATION**

(45) Date of publication and mention of the grant of the patent:
**13.01.2016 Bulletin 2016/02**

(51) Int Cl.:
***G01S 13/90*** (2006.01)

(21) Application number: **13180104.5**

(22) Date of filing: **12.08.2013**

(54) **Method and device for non-uniform sampling of singularity point of multi-channel synthetic-aperture radar (SAR) system**

Verfahren und Vorrichtung zum ungleichförmigen Abtasten eines einzelnen Punkts eines Mehrkanal-SAR-Systems

Procédé et dispositif pour l'échantillonnage non uniforme du point de singularité d'un système radar à ouverture synthétique (RSO) multicanal

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2013 CN 201310058998**

(43) Date of publication of application:
**13.11.2013 Bulletin 2013/46**

(73) Proprietor: **Institute of Electronics, Chinese Academy of Sciences Beijing 100190 (CN)**

(72) Inventors:
- **Deng, Yun-kai**
  **100190 Beijing (CN)**
- **Guo, Lei**
  **100190 Haidian District, (CN)**
- **Wang, Yu**
  **100190 Beijing (CN)**
- **Luo, Xiu-lian**
  **100190 Haidian District (CN)**

- **Ni, Jiang**
  **100190 Beijing (CN)**
- **Zhao, Feng-jun**
  **100190 Beijing (CN)**
- **Liu, Yue**
  **100190 Beijing (CN)**
- **Jia, Xiao-Xue**
  **100190 Haidian District (CN)**

(74) Representative: **Gulde & Partner Patent- und Rechtsanwaltskanzlei mbB Wallstraße 58/59 10179 Berlin (DE)**

(56) References cited:
- **GEBERT N ET AL: "Digital Beamforming on Receive: Techniques and Optimization Strategies for High-Resolution Wide-Swath SAR Imaging", IEEE TRANSACTIONS ON AEROSPACE AND ELECTRONIC SYSTEMS, IEEE SERVICE CENTER, PISCATAWAY, NJ, US, vol. 45, no. 2, 1 April 2009 (2009-04-01), pages 564-592, XP011262853, ISSN: 0018-9251**

**Description**

**TECHNICAL FIELD**

The disclosure relates to a multi-channel non-uniform sampling reconstruction technology, and more particularly to a method and a device for non-uniform sampling of a singularity point of a multi-channel Synthetic-Aperture Radar (SAR) system.

**BACKGROUND**

Multi-channel SAR technology, which is a key technology to resolve the contradiction between SAR azimuth resolution and imaging bandwidth, is of great significance for the development and application of SARs.

The main technical problem existing in a multi-channel SAR system is that sampling uniformity may be caused in the case that a Pulse Repetition Frequency (PRF) deviates from uniform sampling. Generally, non-uniform sampling reconstruction can be realized through a frequency-domain reconstruction filter. However, for special PRF positions, the frequency-domain reconstruction filter may fail due to the existence of a singularity point, thus resulting in a reconstruction failure.

N. Gebert et al. describe in "Digital Beamforming on Receive: Techniques and Optimization Strategies for High-Resolution Wide-Swath SAR Imaging" (IEEE Transactions on Aerospace and Electronic Systems, Vol. 45, Vol. 2, pp. 564-592) a method to handle singularities in multi-channel SAR. The singularities are treated either through a pre-beam shaping network or adapted beamforming.

FR 2,914,432 discloses a method for extrapolating a signal for filling missing pulses or samples on a SAR image. The method divides the signal in different spectral sub-channels. In each sub-channel data are extrapolated through an auto regressive operation. The sub-channels are decomposed through FFT and the final SAR image is obtained by juxtaposition of the sub-channels.

**SUMMARY**

In view of this, the main purpose of the disclosure is to provide a method and a device for non-uniform sampling of a singularity point of a multi-channel SAR system to effectively solve the problem of a singularity point in multi-channel non-uniform sampling reconstruction.

To realize the purpose above, the technical solution of the disclosure is implemented by the following way.

The disclosure provides a method for non-uniform sampling of a singularity point of a multi-channel SAR system. The method includes:

a position of a singularity point is determined and rejection of data is performed for raw echoes of multiple channels; according to a frequency-domain reconstruction filter algorithm, data remained after the rejection are reconstructed to obtain a reconstructed echo signal and imaging is performed to obtain a first image; and
rejected data are reconstructed according to a frequency-domain reconstruction filter algorithm to obtain a reconstructed echo signal, imaging is performed to obtain a second image, and the first image and the second image are superimposed to obtain a third image.

In the solution above, the step of determining the position of the singularity point and performing the rejection of data for the raw echoes of multiple channels may be that: a multi-channel SAR system performs PRF calculation for acquired raw echo data; when PRF satisfies $PRF = \dfrac{N}{N-k} \cdot PRFuni$, a current $N\text{-}k$ value is a singularity point of non-uniform sampling reconstruction, data of raw echoes of first N-k channels are reconstructed and data of raw echoes of last k channels are rejected, where N is the number of sub-channels, k=1,2,...,N-1, $PRFuni$ is a PRF when the acquired raw echo data are sampled uniformly.

In the solution above, the step of reconstructing the data remained after the rejection according to the frequency-domain reconstruction filter algorithm to obtain the reconstructed echo signal and performing the imaging to obtain the first image may be that:

the data of the raw echoes of the first N-k channels, which are remained after the rejection, pass through an N-k-order frequency-domain reconstruction filter to obtain an echo signal equivalent to a single channel, and imaging processing is performed for the echo signal through an imaging algorithm to obtain the first image after the imaging.

In the solution above, the step of reconstructing the rejected data according to the frequency-domain reconstruction filter algorithm to obtain the reconstructed echo signal and performing the imaging to obtain the second image may be that:

data of raw echoes of k channels after the rejection and data of raw echoes of last N-2k channels in the first N-k channels are combined into data of raw echoes of N-k channels, the data of the raw echoes of the N-k channels pass through the N-k-order frequency-domain reconstruction filter to obtain an echo signal equivalent to a single channel, and imaging processing is performed for the echo signal through an imaging algorithm to obtain the second image after the imaging.

A device for non-uniform sampling of a singularity point of a multi-channel SAR system is provided by the disclosure. The device includes: a rejection processing module, a first imaging module, a second imaging module and a synthesis module, wherein

the rejection processing module is configured to determine a position of a singularity point, perform rejection of data for raw echoes of multiple channels, transmit data remained after the rejection to the first imaging module and transmit rejected data to the second imaging module;

the first imaging module is configured to, according to a frequency-domain reconstruction filter algorithm, reconstruct the data remained after the rejection to obtain a reconstructed echo signal and perform imaging to obtain a first image;

the second imaging module is configured to reconstruct the rejected data according to a frequency-domain reconstruction filter algorithm to obtain a reconstructed echo signal, and perform imaging to obtain a second image; and

the synthesis module is configured to superimpose the first image and the second image to obtain a third image.

In the solution above, the rejection processing module may be configured to perform PRF calculation for data of raw echoes; and when PRF satisfies $PRF = \dfrac{N}{N-k} \cdot PRFuni$, a current *N-k* value is a singularity point of non-uniform sampling reconstruction, to transmit data of raw echoes of first N-k channels to the first imaging module and transmit data of raw echoes of last k channels to the second imaging module, where N is the number of sub-channels, k=1,2,...,N-1, *PRFuni* is a PRF when the acquired raw echo data are sampled uniformly.

In the solution above, the first imaging module may be configured to pass the data of the raw echoes of the first N-k channels, which are remained after the rejection, through an N-k-order frequency-domain reconstruction filter to obtain an echo signal equivalent to a single channel, and perform imaging processing for the echo signal through an imaging algorithm to obtain the first image after the imaging.

In the solution above, the second imaging module may be configured to combine data of raw echoes of k channels after the rejection and data of raw echoes of last N-2k channels in the first N-k channels into data of raw echoes of N-k channels, pass the data of the raw echoes of the N-k channels through the N-k-order frequency-domain reconstruction filter to obtain an echo signal equivalent to a single channel, and perform imaging processing for the echo signal through an imaging algorithm to obtain the second image after the imaging.

The disclosure provides a method and a device for non-uniform sampling of a singularity point of a multi-channel SAR system. The position of the singularity point is determined and rejection of data is performed for raw echoes of multiple channels. According to a frequency-domain reconstruction filter algorithm, data remained after the rejection are reconstructed to obtain a reconstructed echo signal and imaging is performed to obtain a first image. Rejected data are reconstructed according to a frequency-domain reconstruction filter algorithm to obtain a reconstructed echo signal, imaging is performed to obtain a second image, and the first image and the second image are superimposed to obtain a third image, thereby effectively solving the problem of a frequency-domain reconstruction filter failure caused by a singularity point and obtaining a higher image Signal to Noise Ratio (SNR) through image compensation.

**BRIEF DESCRIPTION OF THE DRAWINGS**

Fig. 1 is a flowchart of a method for non-uniform sampling of a singularity point of a multi-channel SAR system of the disclosure;

Fig. 2 is a schematic diagram illustrating rejection of data of raw echoes of multiple channels in an embodiment of the disclosure;

Fig .3 is a schematic diagram illustrating reconstruction for data of raw echoes of multiple channels in an embodiment of the disclosure;

Fig. 4 is a schematic diagram illustrating system azimuth fuzzy simulation data of a third image and a first image in an embodiment of the disclosure;

Fig. 5 is a schematic diagram illustrating system sensitivity simulation data of a third image and a first image in an embodiment of the disclosure;

Fig. 6 is a schematic diagram illustrating a single-point target analysis result of a third image and a first image in an embodiment of the disclosure; and

Fig. 7 is a structural diagram of a device for non-uniform sampling of a singularity point of a multi-channel SAR system, which is further provided by the disclosure.

## DETAILED DESCRIPTION

The basic idea of the disclosure is that the position of a singularity point is determined and rejection of data is performed for raw echoes of multiple channels. According to a frequency-domain reconstruction filter algorithm, data remained after the rejection are reconstructed to obtain a reconstructed echo signal and imaging is performed to obtain a first image. Rejected data are reconstructed according to a frequency-domain reconstruction filter algorithm to obtain a reconstructed echo signal, imaging is performed to obtain a second image, and the first image and the second image are superimposed to obtain a third image.

The disclosure will be further described in details below through the accompanying drawings and embodiments.

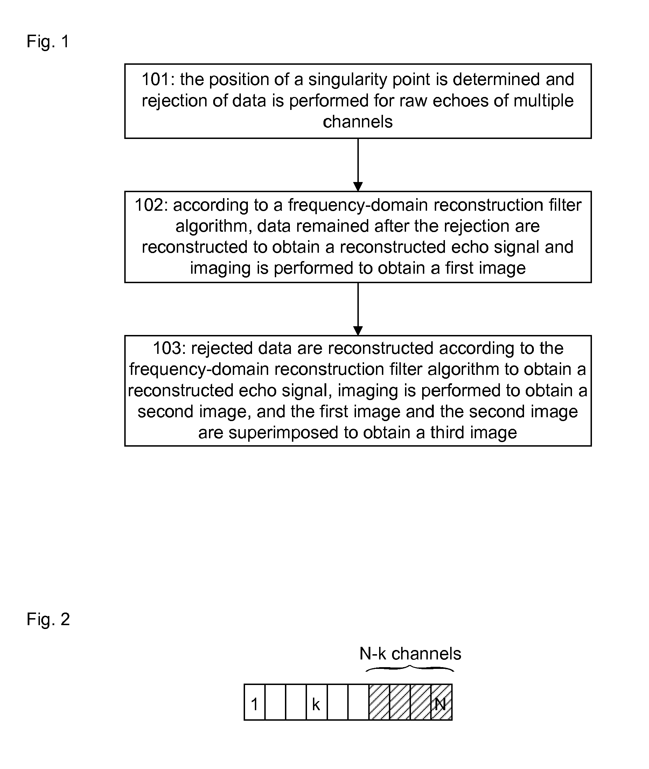

The disclosure realizes a method for non-uniform sampling of a singularity point of a multi-channel SAR system. As shown in Fig. 1, the method includes the following several steps.

Step 101: the position of a singularity point is determined and rejection of data is performed for raw echoes of multiple channels;

specifically, when a PRF satisfies $PRF = \dfrac{2Vs}{N \cdot \Delta x}$, sampling of a multi-channel SAR system is equivalent to uniform sampling of a single channel, and echoes obtained by the multi-channel SAR system can be completely equivalent to echoes obtained by a single channel during transmission of N times of PRF. $Vs$ is a platform flight speed, N is the number of sub-channels and $\Delta x$ is a distance between phase centers;

actually, a PRF which is equivalent to uniform sampling cannot be used by the multi-channel SAR system in many cases due to reasons including design parameter limitation and wave position selection etc., thereby resulting in non-uniform sampling. Azimuth Doppler spectrum aliasing will be caused if processing is not performed, which results in a false target after imaging. Through analysis, signals of multiple channels can be considered to be obtained by a pre-filter $H(f)$ by using signals of a single channel. Band-limited signals of a single channel can be restored as long as inverse $P(f) = H^{-1}(f)$ of the pre-filter can be obtained.

The step includes: the multi-channel SAR system performs PRF calculation for acquired raw echo data; when PRF satisfies $PRF = \dfrac{N}{N-k} \cdot PRFuni$, the current $N$-$k$ value is a singularity point of non-uniform sampling reconstruction, where N is the number of sub-channels, k=1,2,...,N-1, $PRFuni$ is the PRF when the acquired raw echo data are sampled uniformly; data of raw echoes of the first N-k channels are reconstructed and data of raw echoes of the last k channels are rejected. As shown in Fig. 2, it can be seen that the data of the raw echoes of the last k channels are not considered in this case, and the data of the raw echoes of the first N-k channels are signals of uniform sampling of N-k channels.

Step 102: according to a frequency-domain reconstruction filter algorithm, data remained after the rejection are reconstructed to obtain a reconstructed echo signal and imaging is performed to obtain a first image;

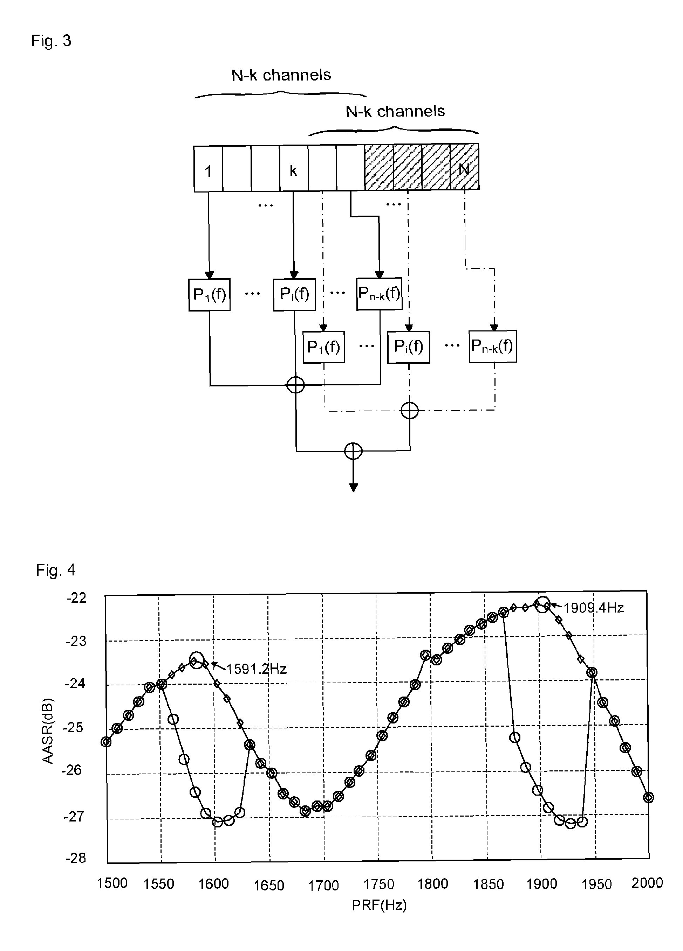

specifically, as shown in Fig. 3, the data of the raw echoes of the first N-k channels which are remained after the rejection pass through an N-k-order frequency-domain reconstruction filter to obtain an echo signal equivalent to a single channel, and imaging processing is performed for the echo signal through an imaging algorithm to obtain the first image after the imaging; the N-k-order frequency-domain reconstruction filter performs an inverse operation ($P_1(f)$, $P_2(f)$, ... $P_{N-k}(f)$) of the pre-filter for the data of the raw echoes of the first N-k channels.

Step 103: rejected data are reconstructed according to the frequency-domain reconstruction filter algorithm to obtain a reconstructed echo signal, imaging is performed to obtain a second image, and the first image and the second image are superimposed to obtain a third image;

specifically, as shown in Fig. 3, the data of the raw echoes of k channels after the rejection and data of raw echoes of the last N-2k channels in the first N-k channels are combined into data of raw echoes of N-k channels, the data of the raw echoes of the N-k channels pass through the N-k-order frequency-domain reconstruction filter to obtain an echo signal equivalent to a single channel, and imaging processing is performed for the echo signal through an imaging algorithm to obtain the second imaged image; the first image and the second image are superimposed to obtain the third image;

superimposing the first mage and the second image to obtain the third image may include: complex numeric data of the first image and complex numeric data of the second image are superimposed linearly to obtain the third image.

By comparing the SNR of the first image with that of the second image as below, the method of the disclosure can obtain a higher image SNR.

The rejection of channel data is equivalent to the case that part of the antennae are not used, which may cause a loss to the system SNR. Considering the SNR after system imaging, the SNR after imaging is:

$$SNR = \frac{P_{tx} \cdot G_{tx}(\Theta_i) \cdot G_{rx,j}(\Theta_i) \cdot \lambda^3 \cdot PRFuni \cdot \tau \cdot N \cdot c_0}{4 \cdot (4\pi)^3 \cdot R_0(\Theta_i)^3 \cdot L_{az} \cdot L \cdot v_s \cdot \sin(\Theta_i) \cdot \Phi_{bf,Bd} \cdot k \cdot Br \cdot T \cdot F} \cdot \sigma^0 \tag{1}$$

where $P_{tx}$ is a peak power of antenna transmission, $G_{tx}$ is a transmitting antenna gain, $G_{rx}$ is a receiving antenna gain, $\lambda$ is a carrier wavelength, $\tau$ is a transmitted pulse width, $\sigma$ is a backscattering coefficient, $C_0$ is a velocity of light, $R_0$ is a slant range, $L_{az}$ is the integration loss of azimuth, L is a system loss, Br is a transmission bandwidth, T is a system temperature, F is a receiver noise coefficient and $\Theta_i$ is a satellite incidence.

$$\Phi_{bf,Bd} = N \cdot \sum_{j=1}^{N} E\left[\left|P_j(f)\right|^2 \cdot rect(\frac{f}{B_D})\right] \tag{2}$$

where f is the frequency axis of azimuth, $B_D$ is a processed Doppler bandwidth;

Formula (2) represents an influencing factor of a noise signal to the system noise after the noise signal passes through a reconstructed network. When $PRF = \frac{N}{N-k} \cdot PRFuni$, $\Phi_{bf,Bd}$ results in sharp worsening of SNR due to the fact that singularity of the frequency-domain reconstruction filter becomes to be unlimitedly amplified;

the $SNR_2$ of the first image obtained by the data of the raw echoes of the first N-k channels is:

$$SNR_2 = \frac{P_{tx} \cdot G_{tx}(\Theta_i) \cdot G_{rx,j}(\Theta_i) \cdot \lambda^3 \cdot PRFuni \cdot \tau \cdot (N-k) \cdot c_0}{4 \cdot (4\pi)^3 \cdot R_0(\Theta_i)^3 \cdot L_{az} \cdot L \cdot v_s \cdot \sin(\Theta_i) \cdot \Phi_{bf,Bd,N-k} \cdot k \cdot Br \cdot T \cdot F} \cdot \sigma^0 \tag{3}$$

here, provided that $N - k \geq k$;

provided that the magnitude of the first image is P, and the energy spectrum $P_{S,1}$ is:

$$P_{S,1} = p^2 \tag{4}$$

$n_i$ is set as noise signals of N channels, $i=1,2....N$, and the noise power spectrum $Noise_1$ of the first image is:

$$Noise_1 = E\left[(n_1 + n_2 + \cdots + n_{N-k})^2\right] \tag{5}$$

since white noises of the system are uncorrelated to each other and have the same power spectrum, it can be obtained that:

$$Noise_1 = (N - k) \cdot P_N \quad (6)$$

where

$$P_N = E(n_i^2) \ (i = 1, 2 \ldots N) \quad (7)$$

After the first image and the second image are superimposed, the magnitude of the third image after the superimposing is also P because the imaging region is not changed, and the energy spectrum $P_{S,2}$ after the superimposing is:

$$P_{S,2} = 4p^2 \quad (8)$$

The noise power spectrum $Noise_2$ after the superimposing is:

$$Noise_2 = E\left[ 4(n_1 + \cdots + n_{N-k})^2 + (n_N - n_1 - \cdots - n_k)^2 + 4(n_N - n_1 - \cdots - n_k) \cdot (n_1 + \cdots + n_{N-k}) \right] \quad (9)$$

Since the noises among the channels are uncorrelated to each other, Formula (9) is expanded to obtain:

$$Noise_2 = (4N - 6k) \cdot P_N \quad (10)$$

Combining (3), (4), (6), (8) and (10), the $SNR_3$ of the third image is:

$$SNR_3 = \frac{2N - 2k}{2N - 3k} \cdot SNR_2 \quad (11)$$

Since $k \geq 1$, $\dfrac{2N - 2k}{2N - 3k} > 1$, the $SNR_3$ of the third image is higher than the $SNR_2$ of the first image.

Fig. 4 shows a schematic diagram illustrating system azimuth fuzzy simulation data of the third image and the first image, wherein the abscissa represents the PRF and the ordinate represents the Azimuth Ambiguity-to-Signal Ratio (AASR). The curve formed by squares is the system azimuth fuzzy simulation data of the first image and the curve formed by circles is the system azimuth fuzzy simulation data of the third image. The peaks pointed by the arrows are the positions of the singularity points. It can be seen that the system azimuth fuzzy simulation data of the third image are greatly reduced at the positions of the singularity points.

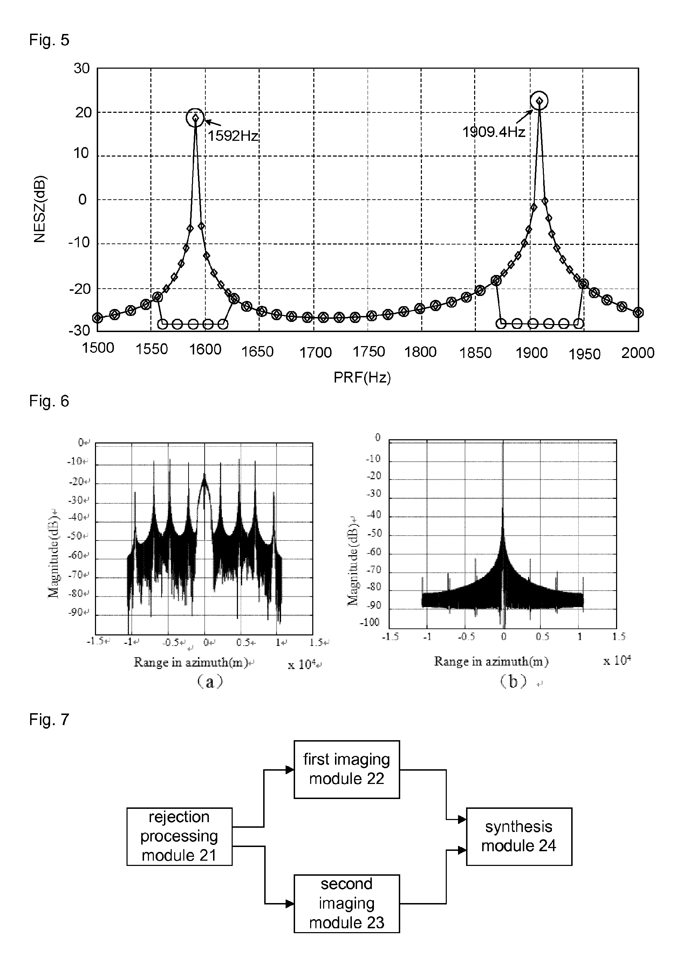

Fig. 5 shows a schematic diagram illustrating system sensitivity simulation data of the third image and the first image, wherein the abscissa represents the PRF and the ordinate represents the system sensitivity Noise Equivalent Sigma Zero (NESZ). The curve formed by squares is the system sensitivity simulation data of the first image and the curve formed by circles is the system sensitivity simulation data of the third image. The peaks pointed by the arrows are the positions of the singularity points. It can be seen that the system sensitivity simulation data of the third image are effectively improved around the positions of the singularity points.

Fig. 6 is shows a single-point target analysis (azimuth section). Fig. (a) represents an imaging result of the first image. The abscissa represents a range in azimuth and the ordinate represents a normalized magnitude. It can be seen that the imaging effect is bad, and there are false targets with extremely high magnitudes, which greatly affects the imaging quality. Fig. (b) represents an imaging result of the third image, and the false targets are inhibited perfectly.

To realize the method above, the disclosure further provides a device for non-uniform sampling of a singularity point of a SAR system. As shown in Fig. 7, the device includes: a rejection processing module 21, a first imaging module 22, a second imaging module 23 and a synthesis module 24, wherein

the rejection processing module 21 is configured to determine the position of a singularity point, perform rejection of data for raw echoes of multiple channels, transmit data remained after the rejection to the first imaging module 22 and transmit rejected data to the second imaging module 23;

the first imaging module 22 is configured to, according to a frequency-domain reconstruction filter algorithm, reconstruct the data remained after the rejection to obtain a reconstructed echo signal and perform imaging to obtain a first image;

the second imaging module 23 is configured to reconstruct the rejected data according to a frequency-domain reconstruction filter algorithm to obtain a reconstructed echo signal, and perform imaging to obtain a second image; and

the synthesis module 24 is configured to superimpose the first image and the second image to obtain a third image.

The rejection processing module 21 is specifically configured to perform PRF calculation for data of raw echoes, and when PRF satisfies $PRF = \dfrac{N}{N-k} \cdot PRFuni$, the current *N-k* value is a singularity point of non-uniform sampling reconstruction, to transmit data of raw echoes of the first N-k channels to the first imaging module 22 and transmit data of raw echoes of the last k channels to the second imaging module 23, where N is the number of sub-channels, k=1, 2, ..., N-1, *PRFuni* is the PRF when the acquired raw echo data are sampled uniformly.

The first imaging module 22 is specifically configured to pass the data of the raw echoes of the first N-k channels, which are remained after the rejection, through an N-k-order frequency-domain reconstruction filter to obtain an echo signal equivalent to a single channel, and perform imaging processing for the echo signal through an imaging algorithm to obtain the first imaged image.

The second imaging module 23 is specifically configured to combine the data of the raw echoes of the k channels after the rejection and data of raw echoes of the last N-2k channels in the first N-k channels into the data of the raw echoes of the N-k channels, pass the data of the raw echoes of the N-k channels through the N-k-order frequency-domain reconstruction filter to obtain an echo signal equivalent to a single channel, and perform imaging processing for the echo signal through an imaging algorithm to obtain the second imaged image.

The above are only preferred embodiments of the disclosure and not used for limiting the protection scope of the disclosure.

## Claims

1. A method for non-uniform sampling of a singularity point of a multi-channel Synthetic-Aperture Radar, SAR, system, the singularity point originating from non-uniform Pulse Repetition Frequency, PRF, comprising:

   determining (101) a position of a singularity point and performing rejection of data for raw echoes of multiple channels;
   according to a frequency-domain reconstruction filter algorithm, reconstructing (102) data remained after the rejection to obtain a reconstructed echo signal and performing imaging to obtain a first image; and
   reconstructing (103) rejected data according to a frequency-domain reconstruction filter algorithm to obtain a reconstructed echo signal, performing imaging to obtain a second image, and superimposing the first image and the second image to obtain a third image.

2. The method according to claim 1, wherein the step of determining the position of the singularity point and performing the rejection of data for the raw echoes of multiple channels is that: a multi-channel SAR system performs Pulse Repetition Frequency, PRF, calculation for acquired raw echo data; when PRF satisfies $PRF = \dfrac{N}{N-k} \cdot PRFuni$, a current *N-k* value is a singularity point of non-uniform sampling reconstruction, data of raw echoes of first N-k channels are reconstructed and data of raw echoes of last k channels are rejected, where N is the number of sub-channels, k=1, 2, ..., N-1, *PRFuni* is a PRF when the acquired raw echo data are sampled uniformly.

3. The method according to claim 2, wherein the step of reconstructing the data remained after the rejection according to the frequency-domain reconstruction filter algorithm to obtain the reconstructed echo signal and performing the imaging to obtain the first image is that:

the data of the raw echoes of the first N-k channels, which are remained after the rejection, pass through an N-k-order frequency-domain reconstruction filter to obtain an echo signal equivalent to a single channel, and imaging processing is performed for the echo signal through an imaging algorithm to obtain the first image after the imaging.

4. The method according to claim 3, wherein the step of reconstructing the rejected data according to the frequency-domain reconstruction filter algorithm to obtain the reconstructed echo signal and performing the imaging to obtain the second image is that:

data of raw echoes of k channels after the rejection and data of raw echoes of last N-2k channels in the first N-k channels are combined into data of raw echoes of N-k channels, the data of the raw echoes of the N-k channels pass through the N-k-order frequency-domain reconstruction filter to obtain an echo signal equivalent to a single channel, and imaging processing is performed for the echo signal through an imaging algorithm to obtain the second image after the imaging.

5. A device for non-uniform sampling of a singularity point of a multi-channel Synthetic-Aperture Radar, SAR, system, the singularity point originating from non-uniform Pulse Repetition Frequency, PRF, comprising a rejection processing module (21), a first imaging module (22), a second imaging module (23) and a synthesis module (24), wherein the rejection processing module (21) is configured to determine a position of a singularity point, perform rejection of data for raw echoes of multiple channels, transmit data remained after the rejection to the first imaging module and transmit rejected data to the second imaging module;
the first imaging module (22) is configured to, according to a frequency-domain reconstruction filter algorithm, reconstruct the data remained after the rejection to obtain a reconstructed echo signal and perform imaging to obtain a first image;
the second imaging module (23) is configured to reconstruct the rejected data according to a frequency-domain reconstruction filter algorithm to obtain a reconstructed echo signal, and perform imaging to obtain a second image; and
the synthesis module (24) is configured to superimpose the first image and the second image to obtain a third image.

6. The device according to claim 5, wherein the rejection processing module (21) is configured to perform Pulse Repetition Frequency, PRF, calculation for data of raw echoes, and when PRF satisfies

$$PRF = \frac{N}{N-k} \cdot PRFuni ,$$ a current $N\text{-}k$ value is a singularity point of non-uniform sampling reconstruction, to transmit data of raw echoes of first N-k channels to the first imaging module and transmit data of raw echoes of last k channels to the second imaging module, where N is the number of sub-channels, k=1, 2, ..., N-1, $PRFuni$ is a PRF when the acquired raw echo data are sampled uniformly.

7. The device according to claim 6, wherein the first imaging module (22) is configured to pass the data of the raw echoes of the first N-k channels, which are remained after the rejection, through an N-k-order frequency-domain reconstruction filter to obtain an echo signal equivalent to a single channel, and perform imaging processing for the echo signal through an imaging algorithm to obtain the first image after the imaging.

8. The device according to claim 7, wherein the second imaging module (23) is configured to combine data of raw echoes of k channels after the rejection and data of raw echoes of last N-2k channels in the first N-k channels into data of raw echoes of N-k channels, pass the data of the raw echoes of the N-k channels through the N-k-order frequency-domain reconstruction filter to obtain an echo signal equivalent to a single channel, and perform imaging processing for the echo signal through an imaging algorithm to obtain the second image after the imaging.

**Patentansprüche**

1. Verfahren für eine ungleichförmige Probennahme eines Singularitätspunktes eines mehrkanaligen Radarsystems mit synthetischer Apertur (SAR-System), wobei der Singularitätspunkt aus der ungleichförmigen Impulswiederholungsfrequenz, PRF, resultiert, umfassend:

Bestimmen (101) einer Position eines Singularitätspunktes und Ausführen der Unterdrückung von Daten für Rohechos mehrerer Kanäle;

gemäß eines Frequenzdomänen-Rekonstruktionsfilteralgorithmus, Rekonstruieren (102) von Daten, die nach der Unterdrückung übrigbleiben, um ein rekonstruiertes Echosignal zu erhalten, und Ausführen der Bildgebung, um ein erstes Bild zu erhalten; und

Rekonstruieren (103) von unterdrückten Daten gemäß eines Frequenzdomänen-Rekonstruktionsfilteralgorithmus, um ein rekonstruiertes Echosignal zu erhalten, Ausführen der Bilderzeugung, um ein zweites Bild zu erhalten, und Überlagern des ersten Bildes und des zweiten Bildes, um ein drittes Bild zu erhalten.

2. Verfahren nach Anspruch 1, wobei der Schritt des Bestimmens der Position des Singularitätspunktes und des Ausführens der Unterdrückung von Daten für die Rohechos der mehreren Kanäle Folgendes umfasst: ein mehrkanaliges SAR-System führt eine Berechnung der Impulswiederholungsfrequenz, PRF, für die erfassten Rohechodaten aus, wenn Gleichung für PRF erfüllt ist $PRF = \dfrac{N}{N-k} \cdot PRFuni$

ein aktueller N-k-Wert ist ein Singularitätspunkt der ungleichförmigen Probennahmerekonstruktion, Daten von Rohechos der ersten N-K Kanäle werden rekonstruiert, und Daten von Rohechos der letzten k Kanäle werden unterdrückt, wobei B die Anzahl der Teilkanäle ist, k=1, 2, ..., N-*1, PRFuni* ist ein PRF, wenn die erfassten Rohechodaten gleichförmig abgetastet werden.

3. Verfahren nach Anspruch 2, wobei der Schritt des Rekonstruierens der Daten, die nach der Unterdrückung gemäß dem Frequenzdomänen-Rekonstruktionsfilteralgorithmus übrigbleiben, um das rekonstruierte Echosignal zu erhalten, und das Ausführen der Bildgebung, um das erste Bild zu erhalten, ist:

die Daten der Rohechos der ersten N-k Kanäle, die nach der Unterdrückung übrigbleiben, laufen durch ein Frequenzdomänen-Rekonstruktionsfilter der Ordnung N-k, um ein Echosignal zu erhalten, das äquivalent zu einem einzelnen Kanal ist, und die Bildgebungsverarbeitung wird für das Echosignal durch einen Bildgebungsalgorithmus ausgeführt, um das erste Bild nach der Bildgebung zu erhalten.

4. Verfahren nach Anspruch 3, wobei der Schritt des Rekonstruierens der unterdrückten Daten gemäß dem Frequenzdomänen-Rekonstruktionsfilteralgorithmus, um das rekonstruierte Echosignal zu erhalten, und des Ausführens der Bildgebung, um das zweite Bild zu erhalten, ist:

Daten von Rohechos von k Kanälen nach der Unterdrückung und Daten von Rohechos der letzten N-2k Kanäle in den ersten N-k Kanälen werden zu Daten von Rohechos von N-k Kanälen kombiniert, die Daten der Rohechos der N-k Kanäle laufen durch das Frequenzdomänen-Rekonstruktionsfilter der Ordnung N-k, um ein Echosignal zu erhalten, das äquivalent zu einem einzelnen Kanal ist, und die Bildgebungsverarbeitung wird für das Echosignal durch einen Bildgebungsalgorithmus ausgeführt, um das zweite Bild nach der Bildgebung zu erhalten.

5. Vorrichtung zum ungleichförmigen Probennahme eines Singularitätspunktes eines mehrkanaligen Radarsystems mit synthetischer Apertur (SAR-System), wobei der Singularitätspunkt aus der ungleichförmigen Impulswiederholungsfrequenz, PRF, resultiert, die ein Unterdrückungsverarbeitungsmodul (21) umfasst, ein erstes Modul (22), ein zweites Modul (23) und ein Synthesemodul (24), wobei

das Unterdrückungsverarbeitungsmodul (21) zum Bestimmen einer Position eines Singularitätspunktes, Ausführen der Unterdrückung von Daten für Rohechos von mehreren Kanälen, Übertragen von Daten, die nach der Unterdrückung übrigbleiben, an das erste Bildgebungsmodul und Übertragen von unterdrückten Daten an das zweite Bildgebungsmodul ausgelegt ist;

das erste Bildgebungsmodul (22) gemäß eines Frequenzdomänen-Rekonstruktionsfilteralgorithmus, zum Rekonstruieren von Daten, die nach der Unterdrückung übrigbleiben, um ein rekonstruiertes Echosignal zu erhalten, und Ausführen der Bildgebung, um ein erstes Bild zu erhalten, ausgelegt ist; und

das zweite Bildgebungsmodul (23) zum Rekonstruieren der unterdrückten Daten gemäß eines Frequenzdomänen-Rekonstruktionsfilteralgorithmus, um ein rekonstruiertes Echosignal zu erhalten, und Ausführen der Bildgebung, um ein erstes Bild zu erhalten, ausgelegt ist; und

das Synthesemodul (24) zum Überlagern des ersten Bildes und des zweiten Bildes ausgelegt ist, um ein drittes Bild zu erhalten.

6. Vorrichtung nach Anspruch 5, wobei das Unterdrückungsverarbeitungsmodul (21) zum Ausführen der Berechnung der Impulswiederholungsfrequenz, PRF, für Daten von Rohechos ausgelegt ist, und wenn PRF die

Gleichung $PRF = \dfrac{N}{N-k} \cdot PRFuni$ erfüllt, ist ein aktueller N-k-Wert ein Singularitätspunkt der ungleichförmigen Probennahmerekonstruktion, um Daten von Rohechos der ersten N-k Kanäle zum ersten Bildgebungsmodul zu übertragen und Daten von Rohechos der letzten k Kanäle an das zweite Bildgebungsmodul zu übertragen, wo N die Anzahl Teilkanälen ist, k=1, 2, ..., N-1, *PRFuni* ist ein PRF, wenn die erfassten Rohechodaten gleichförmig abgetastet werden.

7. Vorrichtung nach Anspruch 6, wobei das erste Bildgebungsmodul (22) zum Passieren der Daten der Rohechos der ersten N-k Kanäle, die nach der Unterdrückung übrigbleiben, durch ein Frequenzdomänen-Rekonstruktionsfilter der Ordnung N-k ausgelegt ist, um ein Echosignal zu erhalten, das äquivalent zu einem einzelnen Kanal ist, und zum Ausführen der Bildgebungsverarbeitung für das Echosignal durch einen Bildgebungsalgorithmus ausgelegt ist, um das erste Bild nach der Bildgebung zu erhalten.

8. Vorrichtung nach Anspruch 7, wobei das zweite Bildgebungsmodul (23) zum Kombinieren von Daten der Rohechos von k Kanälen nach der Unterdrückung und Daten von Rohechos der letzten N-2k Kanäle in den ersten N-k Kanälen zu Daten von Rohechos von N-k Kanälen, Passieren der Daten der Rohechos der ersten N-k Kanäle durch ein Frequenzdomänen-Rekonstruktionsfilter der Ordnung N-k, um ein Echosignal zu erhalten, das äquivalent zu einem einzelnen Kanal ist, und Ausführen der Bildgebungsverarbeitung für das Echosignal durch einen Bildgebungsalgorithmus ausgelegt ist, um das zweite Bild nach der Bildgebung zu erhalten.

## Revendications

1. Procédé d'échantillonnage non uniforme d'un point de singularité d'un système de radar à ouverture synthétiques, SAR, multicanaux, le point de singularité provenant d'une fréquence de répétition d'impulsion, PRF, non uniforme comprenant de :

   déterminer (101) une position d'un point de singularité et effectuer le rejet de données pour les échos bruts des canaux multiples ;
   selon un algorithme de filtre à reconstruction de domaine de fréquence, reconstruire (102) les données restantes après le rejet pour obtenir un signal d'écho reconstruit et effectuer une imagerie pour obtenir une première image ; et
   reconstruire (103) les données rejetées selon un algorithme de filtre à reconstruction de domaine de fréquence afin d'obtenir un signal d'écho reconstruit, effectuer une imagerie pour obtenir une seconde image et superposer la première image et la seconde image pour obtenir une troisième image.

2. Procédé selon la revendication 1, dans lequel l'étape de détermination de la position du point de singularité et de mise en oeuvre du rejet de données pour les échos bruts des canaux multiples consiste à :un système SAR multicanaux effectue un calcul de fréquence de répétition d'impulsion, PRF, pour les données d'écho brutes acquises ;

   quand PRF satisfait à $PRF = \dfrac{N}{N-k} \cdot PRFuni$ une valeur N-k actuelle est un point de singularité de reconstruction d'échantillonnage non uniforme, les données d'échos brutes des premiers canaux N-k sont reconstruites et les données d'écho brutes des derniers k canaux sont rejetées, dans lequel N est le nombre de sous canaux, k=1,2,...,N-1, *PRFuni* est une PRF quand les données d'écho brutes acquises sont échantillonnées uniformément.

3. Procédé selon la revendication 2, dans lequel l'étape de reconstruction de données restantes après le rejet selon l'algorithme de filtre de reconstruction de domaine de fréquence afin d'obtenir le signal d'écho reconstruit et d'effectuer une imagerie pour obtenir la première image consiste à :

   les données des échos bruts des premiers N-k canaux, qui restent après le rejet, passent à travers un filtre de reconstruction à domaine de fréquence d'ordre N-k afin d'obtenir un signal d'écho équivalent à un canal unique, et un traitement d'imagerie est effectué pour le signal d'écho par l'intermédiaire d'un algorithme d'imagerie afin d'obtenir la première image après l'imagerie.

4. Procédé selon la revendication 3, dans lequel l'étape de reconstruction de données rejetées selon l'algorithme de filtre de reconstruction à domaine de fréquence afin d'obtenir le signal d'écho reconstruit et effectuer l'imagerie afin d'obtenir la seconde image consiste à :

les données des échos bruts des k canaux après le rejet et les données des échos bruts des derniers N-2k canaux dans les premiers N-k canaux sont combinées en données d'échos bruts de N-k canaux, les données des échos bruts de N-k canaux passent à travers le filtre de reconstruction à domaine de fréquence d'ordre N-k afin d'obtenir un signal d'écho équivalent à un canal unique, et un traitement d'imagerie est effectué pour le signal d'écho par l'intermédiaire d'un algorithme d'imagerie afin d'obtenir la seconde image après l'imagerie.

5. Dispositif d'échantillonnage non uniforme d'un point de singularité d'un système de radar à ouverture synthétique, SAR, multicanaux, le point de singularité provenant d'une fréquence de répétition d'impulsion, PRF, non uniforme comprenant un module de traitement de rejet (21), un premier module d'imagerie (22), un second module d'imagerie (23) et un module de synthèse (24), dans lequel :

le module de traitement de rejet (21) est configuré pour déterminer une position d'un point de singularité et effectuer le rejet de données pour les échos bruts des canaux multiples ;
le premier module d'imagerie (22) est configuré pour, selon un algorithme de filtre à reconstruction de domaine de fréquence, reconstruire les données restantes après le rejet pour obtenir un signal d'écho reconstruit et effectuer une imagerie pour obtenir une première image ; et
le second module d'imagerie (23) est configuré pour reconstruire les données rejetées selon un algorithme de filtre à reconstruction de domaine de fréquence afin d'obtenir un signal d'écho reconstruit, et effectuer une imagerie pour obtenir une seconde image ; et
le module de synthèse (24) est configuré pour superposer la première image et la seconde image pour obtenir une troisième image.

6. Dispositif selon la revendication 5, dans lequel le module de traitement de rejet (21) est configuré pour effectuer un calcul de fréquence de répétition d'impulsion, PRF, pour les données d'écho brut, et quand PRF satisfait à

$$PRF = \frac{N}{N-k} \cdot PRFuni$$

une valeur N-k actuelle est un point de singularité de reconstruction d'échantillonnage non uniforme, pour transmettre les données d'échos brutes des premiers canaux N-k au premier module d'imagerie et transmettre les données d'écho brutes des derniers k canaux au second module d'imagerie, dans lequel N est le nombre de sous canaux, k=1, 2,...,N-1, *PRFuni* est une PRF quand les données d'écho brutes acquises sont échantillonnées uniformément.

7. Dispositif selon la revendication 6, dans lequel le premier module d'imagerie (22) est configuré pour faire passer les données des échos bruts des premiers N-k canaux, qui restent après le rejet, à travers un filtre de reconstruction à domaine de fréquence d'ordre N-k afin d'obtenir un signal d'écho équivalent à un canal unique, et effectuer un traitement d'imagerie pour le signal d'écho par l'intermédiaire d'un algorithme d'imagerie afin d'obtenir la première image après l'imagerie.

8. Dispositif selon la revendication 7, dans lequel le second module d'imagerie (23) est configuré pour combiner les données des échos bruts des k canaux après le rejet et les données des échos bruts des derniers N-2k canaux dans les premiers N-k canaux en données d'échos bruts de N-k canaux, faire passer les données des échos bruts de N-k canaux à travers le filtre de reconstruction à domaine de fréquence d'ordre N-k afin d'obtenir un signal écho équivalent à un canal unique, et effectuer un traitement d'imagerie pour le signal d'écho par l'intermédiaire d'un algorithme d'imagerie afin d'obtenir la seconde image après l'imagerie.

Fig. 1

> 101: the position of a singularity point is determined and rejection of data is performed for raw echoes of multiple channels

> 102: according to a frequency-domain reconstruction filter algorithm, data remained after the rejection are reconstructed to obtain a reconstructed echo signal and imaging is performed to obtain a first image

> 103: rejected data are reconstructed according to the frequency-domain reconstruction filter algorithm to obtain a reconstructed echo signal, imaging is performed to obtain a second image, and the first image and the second image are superimposed to obtain a third image

Fig. 2

N-k channels

| 1 | | k | | | | | N |

Fig. 3

N-k channels

N-k channels

Fig. 4

Fig. 5

Fig. 6

(a)

(b)

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2914432

**Non-patent literature cited in the description**

- **N. GEBERT et al.** Digital Beamforming on Receive: Techniques and Optimization Strategies for High-Resolution Wide-Swath SAR Imaging. *IEEE Transactions on Aerospace and Electronic Systems,* vol. 45 (2), 564-592